Europäisches Patentamt

European Patent Office

Office européen des brevets

(11) Numéro de publication : **0 429 384 A1**

## (12) DEMANDE DE BREVET EUROPEEN

(21) Numéro de dépôt : **90460044.2**

(22) Date de dépôt : **21.11.90**

(51) Int. Cl.⁵ : **F16N 7/18, B60R 17/00**

(30) Priorité : **23.11.89 FR 8915666**

(43) Date de publication de la demande :
**29.05.91 Bulletin 91/22**

(84) Etats contractants désignés :
**AT BE CH DE DK ES FR GB GR IT LI LU NL SE**

(71) Demandeur : **Le Sech, Pierre, François**
**4 rue de Denver**
**F-29200 Brest (FR)**

(72) Inventeur : **Le Sech, Pierre, François**
**4 rue de Denver**
**F-29200 Brest (FR)**

(74) Mandataire : **Dubreuil, Annie et al**
**Cabinet Ballot-Schmit, Immeuble Le Suffren,**
**23 rue des Peupliers**
**F-56100 Lorient (FR)**

(54) **Dispositif pour le graissage automatique des croisillons de transmission.**

(57)   L'invention concerne un dispositif permettant le graissage automatique des croisillons de transmission de Poids Lourds.

Il est constitué par deux flasques :
— l'un fixe (1) formant réservoir de graisse liquide, alimenté par orifice calibré (3) ;
— l'autre, mobile (2), solidaire de l'arbre de transmission, muni d'un raccord calibré (4) qui, par rotation, génère un courant de la graisse liquide vers les points de lubrification.

Le dispositif, selon l'invention, est destiné à l'amélioration de la maintenance des véhicules Poids Lourds, par graissage automatique des croisillons et coulisseaux de transmission, équipés ou non de graissage centralisé.

FIG.4

EP 0 429 384 A1

# DISPOSITIF POUR LE GRAISSAGE AUTOMATIQUE DES CROISILLONS DE TRANSMISSION

La présente invention concerne un dispositif de graissage automatique des croisillons de transmission sur véhicules Poids Lourds.

Dans le contexte actuel, le graissage de ces pièces se fait manuellement à des fréquences variant de 1000 à 3000 km.

L'éloignement des interventions de maintenance et la diminution des arrêts de véhicules étant les buts recherchés dans le transport routier, de plus en plus nombreux sont les véhicules équipés de graissage centralisé. Mais les procédés, actuellement sur le marché, ne prennent pas en compte le graissage des croisillons ni des coulisseaux.

L'invention présentée a pour objet un graissage permanent et modulé des croisillons et coulisseaux de transmission.

Les dessins annexés illustrent l'invention :

Planche 1/3 :

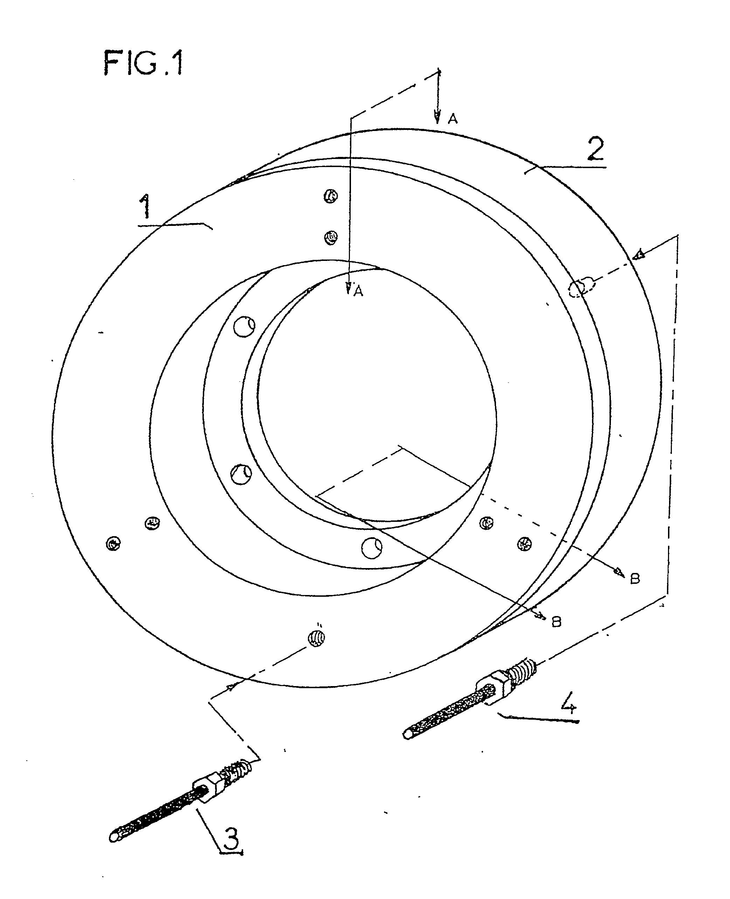

La figure 1 représente une vue de l'ensemble.

Planche 2/3 :

La figure 2 représente, selon coupe AA, le profil d'usinage des flasques, le fixe (1), le mobile (2).

La figure 3 représente, selon coupe BB, les flasques (1) et (2) ainsi que le positionnement des raccords d'alimentation de l'appareil (3) et de sortie vers le graissage (4).

Planche 3/3 :

La figure 4 représente une demi-coupe de l'ensemble monté, partie fixe (1) solidarisée au nez de pont par une des trois pattes (F) vissée en (7), partie mobile (2) solidarisée au plateau de transmission (M) par les boulons d'assemblage (8).

La sortie (4) et le T de graissage (5) du croisillon avec le prolongement (6) vers un éventuel graissage de coulisseau.

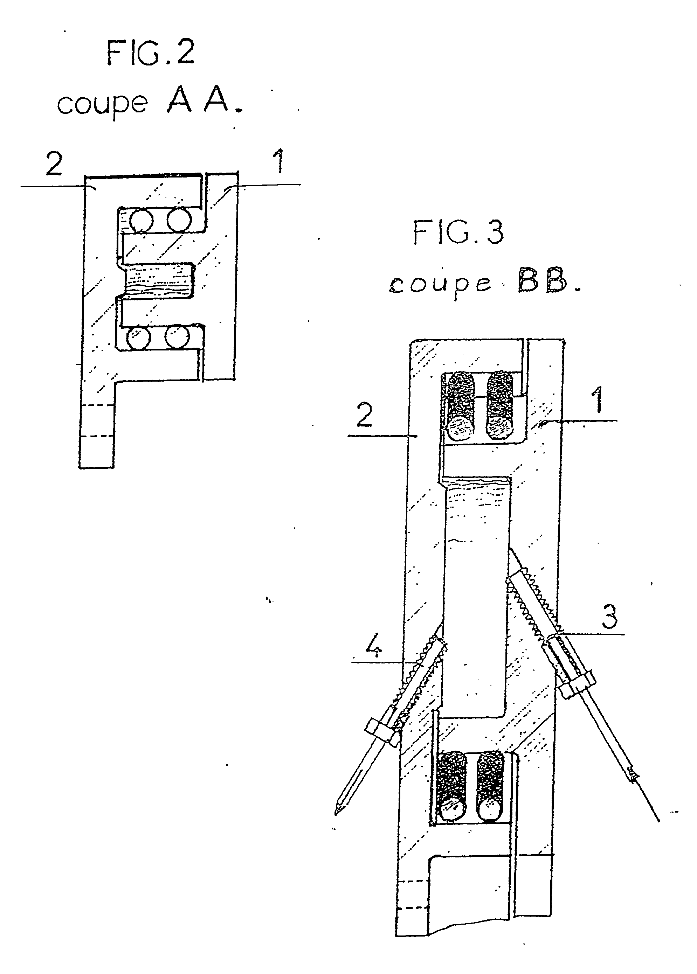

Composée par deux flasques : l'un fixe (1) dont le profil d'usinage (Fig. 2) engendre une cavité constamment approvisionnée en graisse liquide, par un raccord calibré (3), vissé dans la partie fixe (1), et relié à une réserve de graisse liquide ou au distributeur du graissage centralisé.

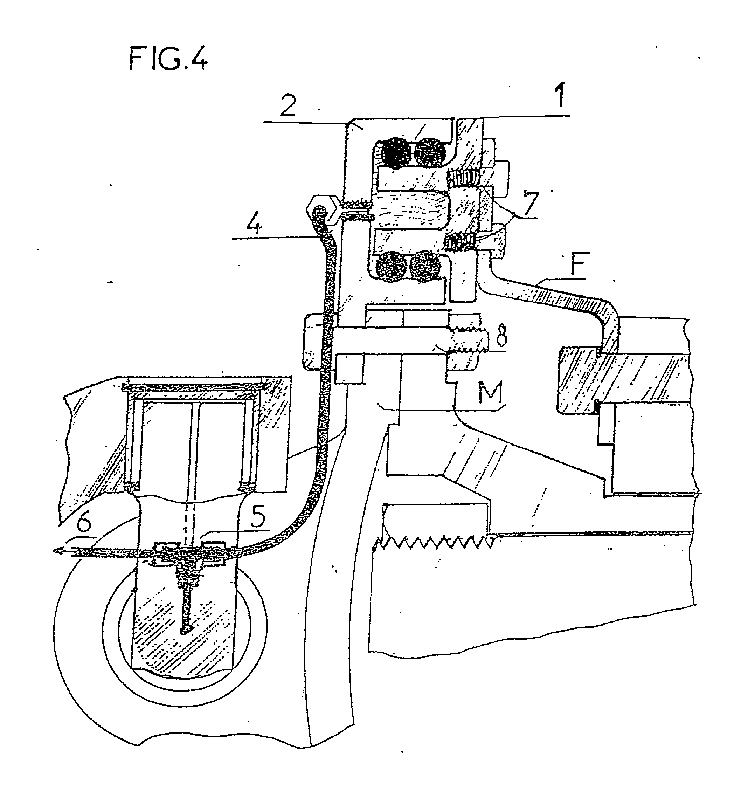

L'autre mobile (2) solidarisé au plateau de l'arbre de transmission, comporte un raccord calibré (4), vissé, sous un angle d'environ 30° (fig. 3) dans le sens de rotation de l'arbre de transmission afin de "piocher" la graisse liquide pour l'acheminer au point de graissage (5), Fig.4, permettant une éventuelle continuation du graissage vers un coulisseau (6).

L'étanchéité du dispositif est assurée par joints toriques dynamiques.

L'invention présentée, adaptable, sans modification du véhicule, équipé ou non d'un graissage centralisé, n'utilise que la rotation de l'arbre de transmission comme énergie.

## Revendications

1. Dispositif de graissage automatique des croisillons de transmission "Poids lourds", caractérisé en ce qu'il comporte un flasque fixe (1) et un flasque (2) tournant avec l'arbre de transmission, usinés et assemblés de manière à former entre eux une réserve de graisse liquide rendue étanche au moyen de joints dynamiques, un raccord calibré (3) d'arrivée de graisse à travers le flasque fixe (1), relié à une réserve de graisse, un raccord calibré (4) de sortie de graisse à travers le flasque mobile (2), et une canalisation conduisant aux éléments à graisser à partir dudit raccord de sortie (4), lequel est vissé dans le flasque (2) selon un angle aigu dans le sens de rotation de l'arbre, de manière à piocher la graisse liquide pour son acheminement au(x) point(s) de graissage.

2. Dispositif selon la revendication 1, caractérisé en ce que le raccord de sortie (4) est vissé sous un angle de 30°, environ, dans le sens de rotation de l'arbre de transmission.

3. Dispositif selon la revendication 1 ou 2, caractérisé en ce que le flasque fixe (1) est solidarisé avec le nez de pont, tandis que le flasque (2) est solidarisé avec le plateau de transmission.

FIG.1

FIG.2

coupe A A.

FIG.3

coupe BB.

FIG.4

Office européen
des brevets

# RAPPORT DE RECHERCHE EUROPEENNE

Numero de la demande

EP  90 46 0044

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-1756335 (BIJUR)<br>* le document en entier *<br>--- | 1, 3 | F16N7/18<br>B60R17/00 |
| Y | DE-A-2307024 (BARCAIOLI)<br>* le document en entier *<br>--- | 1, 3 | |
| A | FR-A-482374 (PANHARD & LEVASSOR)<br>--- | | |
| A | FR-A-446182 (GROULART)<br>--- | | |
| A | FR-A-340781 (JARKOWSKI)<br>----- | | |

DOMAINES TECHNIQUES
RECHERCHES (Int. Cl.5)

F16N
B60R

Le présent rapport a été établi pour toutes les revendications

| Lieu de la recherche | Date d'achèvement de la recherche | Examinateur |
|---|---|---|
| LA HAYE | 15 FEVRIER 1991 | KOOIJMAN F.G.M. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P0403)